# DEMANDE DE BREVET EUROPEEN

(11) **EP 2 515 269 A1**
(43) Date de publication de la demande: **24.10.2012**
(21) Numéro de dépôt: 12165228.3
(22) Date de dépôt: 23.04.2012
(51) Int. Cl.: G06Q 30/00, H04L 12/14

(54) **Procédé améliore d'accès a un contenu multimédia**

(30) Priorité: 22.04.2011 FR 1153521
(71) Demandeur: Webdeviin, 92100 Boulogne Billancourt (FR)
(72) Inventeur: Jauson, Loïc, 92100 BOULOGNE-BILLANCOURT (FR)
(74) Mandataire: Le Forestier, Eric

(57) **Abrégé**

Procédé d'accès à un contenu multimédia (M) stocké dans un serveur d'un site fournisseur (E) depuis un équipement informatique (C) d'un utilisateur (U), l'équipement informatique (C) étant connecté à un réseau (N) via une architecture d'un fournisseur d'accès (ISP), le procédé étant caractérisé en ce qu'il comprend les étapes suivantes :
■ transfert à l'équipement informatique (C) d'instructions pour lancer une interface de visualisation (I) apte à lire ledit contenu multimédia (M) et apte à communiquer via le réseau (N) avec une plateforme de gestion d'accès (AMP),
■ lancement sur l'équipement informatique (C) de l'interface (I),
■ envoi par l'interface (I) à la plateforme de gestion d'accès (AMP) d'une requête d'accès au contenu multimédia (M),
■ réception du contenu multimédia (M) par l'interface (I),
■ lecture du contenu multimédia (M) dans l'interface (I),
■ envoi par l'interface (I) d'un premier ensemble de données caractéristiques de la lecture du contenu multimédia (M) à la plateforme de gestion d'accès (AMP),
■ traitement par la plateforme de gestion d'accès (AMP) du premier ensemble de données de sorte à obtenir un second ensemble de données caractéristiques de la lecture du contenu multimédia (M), ledit second ensemble de données caractéristiques de la lecture du contenu multimédia (M) étant envoyé à un serveur du fournisseur d'accès (ISP) afin de facturer à l'utilisateur (U) la lecture du contenu multimédia (M).

## Description

La présente invention se situe dans le domaine de la gestion d'accès à des contenus multimédia sur un réseau de transmission de données.

Plus particulièrement, la présente invention se situe dans le domaine de la monétisation de contenus multimédia payants sur Internet.

Plus particulièrement encore, la présente invention se situe dans le cadre d'une facturation (préférentiellement à la durée) de l'accès à un contenu multimédia payant d'un site Internet sans besoin de détenir un compte utilisateur ou un compte client auprès dudit site Internet.

Dans ce domaine, les acteurs fournissant des contenus multimédia se trouvent confrontés au problème de la monétisation de ces contenus, et aux enjeux économiques correspondants.

En effet, la monétisation des audiences et consommations à partir d'un site Internet repose aujourd'hui principalement sur
- d'une part, un modèle publicitaire, qui n'est viable que pour les sites à forte fréquentation, ou
- d'autre part, des actes de paiement de la part de l'utilisateur.

Or, dans un contexte de baisse des revenus publicitaires traditionnels, et alors que la pression concurrentielle augmente, la question de la monétisation des contenus multimédia sur Internet est au coeur de la viabilité économique de nombreux sites Internet.

A cet égard, l'état de la technique comprend plusieurs solutions :
- les solutions de type « ticketing » (par ticket) où l'utilisateur doit passer par un canal surtaxé (Audiotel ou SMS par exemple) pour acheter un ticket (ou jeton d'authentification), par exemple sous forme d'un code, pour accéder aux contenus payants d'un site Internet qu'il souhaite consulter,
- les solutions de cartes prépayées disponibles dans des points de vente ou sous forme de porte-monnaie électronique,
- les solutions de type « carte bancaire » dans lesquelles l'utilisateur paie directement sur le site par carte bancaire et/ou par un compte de paiement tiers (comme la solution de paiement Internet Paypal™), avant de pouvoir consulter le contenu payant souhaité,
- les solutions de type « Internet + » qui s'appuient sur une facturation directe via l'opérateur téléphonique ou FAI mais qui concernent uniquement les formes d'abonnement (c'est-à-dire sous forme d'abonnement périodique - hebdomadaire ou mensuel), ou de paiement à l'acte.

Il existe également des solutions de paiement à la durée, mais qui nécessitent que l'utilisateur réalise un appel téléphonique pendant qu'il navigue sur le site à service payant (par exemple AlloPass™ ou Rentabiliweb™).

Par exemple, selon l'une de ces solutions, l'utilisateur peut visiter la partie payante d'un site pendant un temps égal à la durée de sa communication avec le serveur vocal sur un canal téléphonique qui sera alors surtaxé au profit du fournisseur d'accès Internet. La solution propose alors deux modes de fonctionnement :
- Si l'internaute a la possibilité de téléphoner tout en naviguant sur Internet, il reste en ligne avec le serveur vocal pendant toute la durée de sa visite sur la zone payante. Lorsqu'il raccroche son téléphone, il ne peut plus visiter cette zone payante.
- Si l'internaute n'a pas la possibilité de téléphoner tout en naviguant sur Internet, il a alors la possibilité de charger un code d'accès sur le serveur vocal Allopass avec du « temps-crédit ». Plus tard, il pourra alors utiliser ce code d'accès pour accéder à la zone payante pendant une durée maximale égale à celle de son appel sur le serveur vocal.

Ces solutions présentent pour l'utilisateur de fortes contraintes et ne correspondent en aucun cas à un réel accès à la durée car il n'y a aucune coupure instantanée de la navigation lors d'une coupure du canal de paiement (ici le canal téléphonique).

Ainsi, un but de la présente invention est de fournir une méthode de gestion d'accès à des contenus multimédia payants permettant de surmonter les problèmes précités.

Un autre but de la présente invention est de permettre une facturation de l'accès à un contenu multimédia payant qui soit moins contraignante pour l'utilisateur que les solutions précitées, notamment qui ne nécessite pas, pour l'utilisateur, la saisie d'un code d'accès.

Encore un autre but de la présente invention est de permettre une facturation à la durée de consultation du contenu payant, facturation qui soit directement effectuée via le fournisseur d'accès de l'utilisateur, c'est-à-dire qu'au final, la facturation du contenu payant est effectuée par la facturation du fournisseur d'accès.

A cet effet, l'invention propose un procédé d'accès à un contenu multimédia stocké dans un serveur d'un site fournisseur depuis un équipement informatique d'un utilisateur, l'équipement informatique étant connecté à un réseau via une architecture d'un fournisseur d'accès, le procédé étant caractérisé en ce qu'il comprend les étapes suivantes :
■ transfert à l'équipement informatique d'instructions pour lancer une interface de visualisation apte à lire ledit contenu multimédia et apte à communiquer via le réseau avec une plateforme de gestion d'accès,
■ lancement sur l'équipement informatique de l'interface,
■ envoi par l'interface à la plateforme de gestion d'accès d'une requête d'accès au contenu multimédia,
■ réception du contenu multimédia par l'interface,
■ lecture du contenu multimédia dans l'interface,
■ envoi par l'interface d'un premier ensemble de données caractéristiques de la lecture du contenu multimédia à la plateforme de gestion d'accès,
■ traitement par la plateforme de gestion d'accès du premier ensemble de données de sorte à obtenir un second ensemble de données caractéristiques de la lecture du contenu multimédia, ledit second ensemble de données caractéristiques de la lecture du contenu multimédia étant envoyé à un serveur du fournisseur d'accès afin de facturer à l'utilisateur la lecture du contenu multimédia.

Avantageusement, mais facultativement, l'invention comprend au moins l'une des caractéristiques suivantes :
■ le réseau est le réseau Internet et le fournisseur d'accès est un fournisseur d'accès Internet,
■ le serveur du site fournisseur est connecté au réseau via la plateforme de gestion d'accès, et le procédé comprend les étapes suivantes :
   ■ envoi par l'interface à la plateforme de gestion d'accès d'une requête d'accès au contenu multimédia,
   ■ envoi par la plateforme de gestion d'accès au serveur du site fournisseur d'une requête d'accès au contenu multimédia,
   ■ réception par la plateforme de gestion d'accès du contenu multimédia envoyé par le serveur du site fournisseur en réponse à la requête d'accès au contenu multimédia,
   ■ envoi par la plateforme de gestion d'accès du contenu multimédia à l'interface.
■ lors d'une requête d'accès au contenu multimédia par l'interface, cette dernière génère un jeton d'authentification pour s'identifier sur la plateforme de gestion d'accès,
■ le serveur du site fournisseur et la plateforme de gestion d'accès sont tous deux connectés directement au réseau, le procédé étant caractérisé en ce qu'il comprend les étapes suivantes :
   ■ envoi par l'interface à la plateforme de gestion d'une requête d'accès au contenu multimédia,
   ■ envoi par la plateforme de gestion d'un jeton d'authentification à l'interface,
   ■ envoi par l'interface du jeton d'authentification au site fournisseur,
   ■ vérification par le site fournisseur du jeton d'authentification auprès de la plateforme de gestion,
   ■ en cas de vérification positive, envoi par le site fournisseur du contenu multimédia (M) à l'interface.
■ le procédé comprend une étape de requête d'accès par l'interface à la plateforme de gestion pour chaque nouveau contenu multimédia,
■ la plateforme de gestion envoie un nouveau jeton d'identification pour chaque nouveau contenu multimédia demandé,
■ l'envoi par l'interface d'un premier ensemble de données caractéristiques de la lecture du contenu multimédia à la plateforme de gestion d'accès comprend au moins l'une des informations suivantes :
   ■ temps de lecture,
   ■ quantité de contenu multimédia reçu ou lu,
   ■ arrêt de lecture du contenu multimédia,
   ■ arrêt de l'interface,
   ■ erreur dans la réception ou la lecture du contenu multimédia.

L'invention concerne également un procédé de d'accès à un contenu multimédia depuis un équipement informatique d'un utilisateur, l'équipement informatique étant connecté à un réseau via une architecture d'un fournisseur d'accès, le procédé étant caractérisé en ce qu'il comprend les étapes suivantes :
■ lancement sur l'équipement informatique d'une interface apte à lire ledit contenu multimédia et apte à communiquer via le réseau avec une plateforme de gestion d'accès,
■ envoi à la plateforme de gestion d'accès d'une requête d'accès au contenu multimédia,
■ réception du contenu multimédia,
■ lecture du contenu multimédia par l'interface,
■ envoi d'un ensemble de données relatives à la lecture du contenu media à la plateforme de gestion d'accès.

L'invention concerne également un procédé d'accès à un contenu multimédia stocké dans un serveur d'un site fournisseur depuis un équipement informatique d'un utilisateur, l'équipement informatique étant connecté à un réseau via une architecture d'un fournisseur d'accès, le procédé étant caractérisé en ce qu'il comprend les étapes suivantes :
■ réception d'une requête d'accès à un contenu multimédia de la part d'une interface de l'équipement informatique, l'interface étant apte à lire ledit contenu multimédia,
■ vérification de l'autorisation d'accès,
■ en cas de vérification positive, envoi d'une requête d'accès au contenu multimédia demandé auprès du site fournisseur,
■ réception du contenu multimédia,
■ envoi du contenu multimédia vers l'interface,
■ réception d'un ensemble de données relatives à la lecture du contenu multimédia à la plateforme de gestion d'accès émises par l'interface,
■ envoi de données relatives à la lecture du contenu multimédia à un serveur fournisseur d'accès afin de facturer à l'utilisateur la lecture du contenu multimédia.

L'invention concerne également un procédé d'accès à un contenu multimédia stocké dans un serveur d'un site fournisseur depuis un équipement informatique d'un utilisateur, l'équipement informatique étant connecté à un réseau via une architecture d'un fournisseur d'accès, le procédé étant caractérisé en ce qu'il comprend les étapes suivantes :
■ réception d'une requête d'accès au contenu multimédia de la part d'une interface de l'équipement informatique, l'interface étant apte à lire ledit contenu multimédia et apte à communiquer via le réseau avec une plateforme de gestion d'accès,
■ vérification de l'autorisation d'accès,
■ en cas de vérification positive, envoi à l'interface d'un jeton d'authentification pour l'accès au contenu multimédia,
■ réception d'un ensemble de données caractéristiques de la lecture du contenu multimédia à la plateforme de gestion d'accès émises par l'interface,
■ traitement par la plateforme de gestion d'accès du premier ensemble de données de sorte à obtenir un second ensemble de données relatives à la lecture du contenu multimédia, ledit second ensemble de données caractéristiques de la lecture du contenu multimédia étant envoyé à un serveur du fournisseur d'accès afin de facturer à l'utilisateur la lecture du contenu multimédia.

L'invention concerne également une plateforme de gestion d'accès, caractérisée en ce qu'elle comprend des moyens de mise en oeuvre du procédé selon l'invention.

L'invention concerne également un environnement informatique pour permettre l'accès à un contenu multimédia par un utilisateur, caractérisé en ce qu'il comprend :
■ un équipement informatique connecté à un réseau via une architecture d'un fournisseur d'accès,
■ un serveur d'un site fournisseur connecté directement ou indirectement au réseau,
■ une plateforme de gestion d'accès connecté au réseau,
■ des moyens de mise en oeuvre du procédé selon l'invention.

L'invention propose également un produit de programme d'ordinateur, caractérisé en ce qu'il comprend des moyens de génération d'une interface de visualisation de contenu multimédia, l'interface étant destinée à :
■ envoyer via un réseau une requête d'accès au contenu multimédia à une plateforme de gestion d'accès,
■ envoyer un jeton d'authentification
■ recevoir un contenu multimédia,
■ lire le contenu multimédia, et
■ envoyer un ensemble de données caractéristiques de la lecture du contenu multimédia à la plateforme de gestion d'accès.

D'autres caractéristiques, buts et avantages de la présente invention apparaitront à la lecture de la description détaillée qui va suivre, au regard des figures annexées, données à titre d'exemple non limitatif et sur lesquelles :
- la figure 1 est une représentation schématique d'un environnement informatique de diffusion d'un contenu multimédia selon un premier mode de réalisation de la présente invention,
- la figure 2 est un graphe fonctionnel d'un procédé de diffusion d'un contenu multimédia selon un premier mode de réalisation de la présente invention,
- la figure 3 est une représentation schématique d'un environnement informatique de diffusion d'un contenu multimédia selon un second mode de réalisation de la présente invention,
- la figure 4 est un graphe fonctionnel d'un procédé de diffusion d'un contenu multimédia selon un second mode de réalisation de la présente invention,
- les figures 5a et 5b sont des exemples de réalisation d'une interface dédiée à la lecture d'un contenu multimédia selon une réalisation possible de la présente invention.

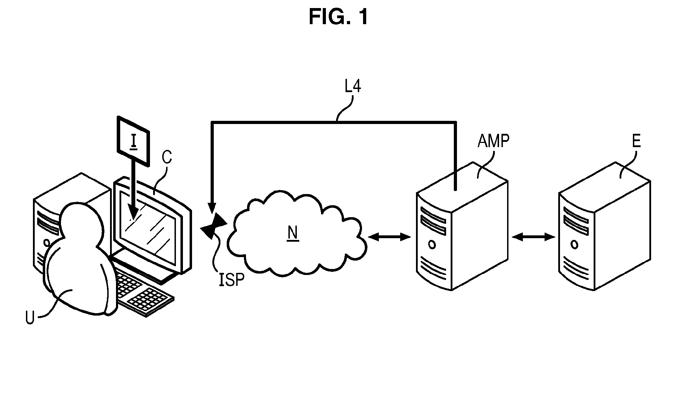

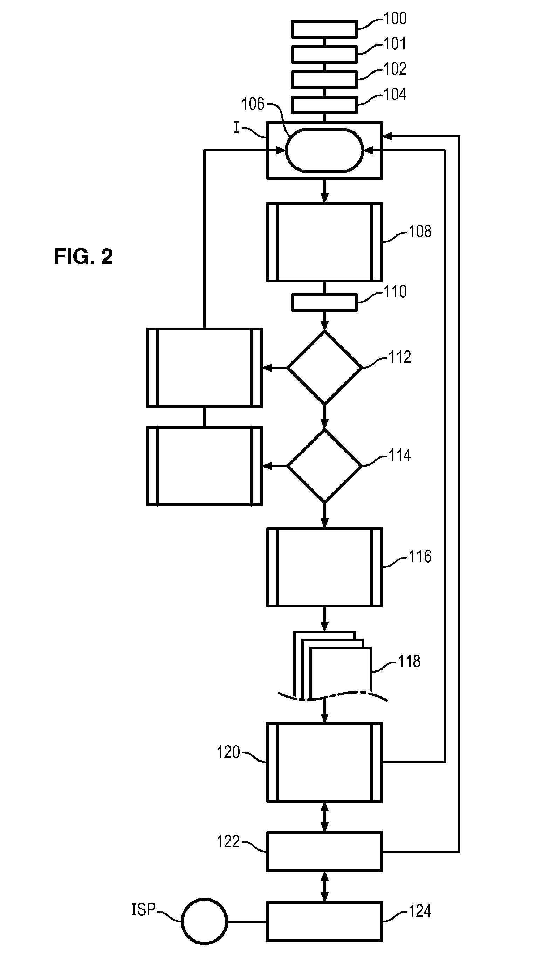

En référence aux figures 1 et 2 et selon un premier mode de réalisation de la présente invention, un utilisateur U possède un équipement informatique C connecté à un réseau N. Le réseau N peut être de tout type permettant à un ou plusieurs ordinateurs d'être connecté à distance. Préférentiellement, le réseau N est le réseau Internet. L'équipement informatique C est notamment un ordinateur de tout type permettant à un utilisateur de pouvoir se connecter à un serveur pour demander l'accès à un contenu spécifique (par exemple un poste de travail du type PC ou Macintosh) via l'envoi de requêtes. Préférentiellement l'ordinateur C comprend une unité centrale de traitement, des mémoires de travail et de stockage, une interface de communication avec l'utilisateur U et une interface de connexion au réseau R (comme une carte modem, une carte Ethernet, un module WiFi, etc.) permettant à l'ordinateur C de pouvoir être connecté au réseau N. L'interface de communication avec l'utilisateur comprend préférentiellement un ou plusieurs périphérique(s) d'entrée (tel qu'un clavier et/ou une souris) et un ou plusieurs périphérique(s) de sortie (notamment un écran).

L'équipement informatique C de l'utilisateur U est connecté au réseau N par l'intermédiaire d'une architecture d'un fournisseur ISP d'accès au réseau N, c'est-à-dire un réseau de l'opérateur qui permet l'interconnexion. Dans le cas du réseau Internet, le fournisseur ISP est du type Fournisseur d'Accès Internet (FAI). Généralement le fournisseur ISP d'accès au réseau N offre à l'utilisateur final U un accès au réseau N à un ou plusieurs ordinateur(s) en contrepartie d'un paiement (par exemple une facture mensualisée au forfait ou au temps de connexion). L'accès au réseau N est le plus souvent rendu possible grâce à la mise à disposition auprès de l'utilisateur de boitiers appelés « Integrated Access Devices » (IAD), ou plus communément « box » offrant la connectivité entre l'ordinateur C de l'utilisateur et l'architecture du fournisseur ISP (un réseau opérateur, ou « backbone » dans le cas d'un FAI), lui-même interconnecté avec le réseau N.

Sur le réseau N est connecté également un site E éditeur et fournisseur de contenus multimédia M comprenant un serveur destiné à recevoir des requêtes d'accès (on trouvera également le terme de « demande » d'accès dans la suite de la présente description) à des contenus multimédia, les requêtes émanant par exemple d'un utilisateur via un ordinateur connecté au réseau N. De telles requêtes peuvent par exemple être basées sur le protocole HTTP ou HTTPS. Généralement, en réponse à une demande d'accès, le site fournisseur E fournit, sous condition, via le réseau N, le contenu multimédia demandé à l'utilisateur. Il existe aujourd'hui de nombreux exemples de site fournisseur de contenus multimédia comme les sites d'information (www.cnn.com, www.lemonde.fr, ...), les sites de réseaux sociaux (Fotolog, Sinico, ...) ou les sites d'hébergement audio/vidéo (www.youtube.com, www.dailymotion.com, ...).

Le contenu multimédia M peut être de tout type transmissible par un réseau informatique (images, contenu audio, contenu vidéo, page Internet statique ou dynamique, ...).

Ce contenu est généralement accessible via un navigateur, comme un navigateur web apte à interpréter un ou plusieurs langage(s) de description (HTML, XHTML, ...) et à lancer un ou plusieurs éléments dynamiques (Javascript™, Abode Flash™, ou tout autre application Interne riche ou « Rich Internet Application» - RIA- en termes anglo-saxons) ou tout autre élément application de média riche («Rich Media Application » en termes anglo-saxons). Des exemples navigateurs Web sont : Internet Explorer™, Firefox™, Chrome™, Safari™, Opera™, _{...}

Certains de ces contenus multimédia sont à accès payant et l'état de la technique propose de nombreuses solutions permettant à l'utilisateur U d'accéder à ses contenus multimédias M payants, en téléchargement ou en flux (streaming en terminologie anglo-saxonne), comme décrit précédemment. Toutefois nous avons vu que ces solutions n'offraient pas entière satisfaction.

C'est pourquoi, selon un premier mode de réalisation de la présente invention, le site fournisseur E délivrant des contenus multimédia M, notamment payants, est connecté au réseau N via une plateforme de gestion d'accès AMP destinée à la gestion des demandes d'accès aux contenus multimédia du site fournisseur E.

Selon ce mode de réalisation particulier, l'utilisateur U accède au site fournisseur E via la plateforme de gestion d'accès AMP. Cette plateforme de gestion d'accès AMP est ainsi destinée à la gestion des requêtes d'accès au contenu multimédia du site fournisseur E émanant des ordinateurs connectés au réseau N. Dans le cas de demandes d'accès à des contenus multimédia gratuits, la plateforme de gestion d'accès AMP relaye simplement les requêtes d'accès au site fournisseur E et relaye à l'utilisateur U le contenu multimédia fourni par le site fournisseur E en réponse.

En référence maintenant à la figure 2, dans le cas d'une demande d'accès (étape 100) à un contenu payant, la plateforme de gestion d'accès AMP transmet (étape 101) par le réseau N à l'utilisateur U des instructions pour lancer une interface spécifique I de lecture du contenu payant, l'interface étant apte à communiquer avec la plateforme de gestion d'accès AMP. Une fois cette interface I spécifique 102 téléchargée par l'ordinateur C de l'utilisateur U (par exemple sous la forme d'un paquet exécutable), l'interface I est lancée (étape 104). Préférentiellement, elle est intégrée sous forme de module d'extension à un navigateur de réseau (comme un navigateur Web) ou peut être lancée indépendamment du navigateur. Une fois cette interface I lancée, elle envoie une requête d'accès au contenu payant M demandé. Préférentiellement il est prévu que l'utilisateur confirme la requête d'accès à un tel contenu. La plateforme de gestion d'accès AMP génère alors automatiquement (étape 108) un jeton d'authentification qu'elle envoie (étape 110) à l'interface I. La plateforme de gestion d'accès AMP vérifie alors (étape 112) que l'interface I de l'utilisateur U est bien autorisée à utiliser la plateforme de gestion d'accès AMP en vérifiant par exemple l'éligibilité de l'utilisateur U à utiliser cette option de paiement. La plateforme de gestion d'accès AMP vérifie alors, par exemple que le fournisseur ISP d'accès au réseau accepte effectivement un tel mode de facturation et/ou que l'utilisateur U n'a pas désactivé auprès de son fournisseur ISP d'accès réseau la sélection d'un tel mode de paiement. Après cette authentification, dans l'affirmative, la plateforme tente de se connecter (étape 114) au site fournisseur E et plus spécifiquement au contenu payant demandé. Dans la négative (ainsi que dans la négative de l'étape 112) la plateforme de gestion d'accès AMP envoie à l'interface I un message d'erreur que l'interface I affiche à destination de l'utilisateur U. Dans l'affirmative de l'étape 114, la plateforme de gestion d'accès AMP transmet (étape 116) alors la requête d'accès au contenu payant au site fournisseur E. Le site fournisseur E après avoir vérifié la validité de la demande d'accès (par exemple en identifiant que la requête provenait de la plateforme de gestion d'accès AMP) fournit en réponse (étape 118) le contenu multimédia M demandé à la plateforme de gestion d'accès AMP. Cette dernière transmet alors (étape 120) le contenu multimédia, via le réseau N à l'ordinateur C de l'utilisateur U afin qu'il soit lu par l'interface I.

Durant la lecture du contenu multimédia M par l'interface I ou à la fin de la lecture du contenu multimédia, ou après un arrêt de la lecture ou encore après une erreur de lecture ou de réception du contenu multimédia M, l'interface I envoie (étape 122) un premier ensemble de données relatives à la lecture du contenu multimédia à la plateforme de gestion d'accès AMP. Par exemple ces données peuvent comprendre des informations relatives à la durée de lecture et/ou à une quantité de contenu multimédia reçu ou lu (nombre d'éléments ou taille des éléments) et/ou à un arrêt de lecture et/ou un arrêt de l'interface I et/ou à une erreur dans la réception ou la lecture du contenu multimédia. Ces informations seront alors utilisées par la plateforme de gestion d'accès AMP pour la facturation du contenu multimédia lu ou reçu. Préférentiellement l'interface I envoie des informations relatives à l'arrêt de lecture et/ou un arrêt de l'interface permettant à la plateforme de gestion d'accès AMP de déterminer la durée de lecture effectuée par l'interface I pour la facturation du contenu multimédia.

Selon une caractéristique de la présente invention, une fois le premier ensemble de données relatives à la lecture du contenu multimédia traité par la plateforme de gestion d'accès AMP (en d'autres termes le montant de la facturation déterminé) cette dernière envoie (étape 124) un second ensemble de données relatives à la lecture du contenu multimédia (c'est-à-dire cette information de facturation, ainsi que toute information permettant d'identifier l'utilisateur associé) au fournisseur ISP d'accès réseau (plus précisément à un serveur du fournisseur ISP d'accès réseau) pour que ce dernier répercute ce montant sur la facturation de l'utilisateur U pour la connexion au réseau. L'envoi de ce second ensemble de données peut être réalisé via une connexion L4 entre la plateforme de gestion d'accès AMP et le fournisseur d'accès au réseau ISP. Cette connexion L4 peut être de tout type de connexion permettant l'envoi de cette information (connexion Internet, ligne dédiée, lignes X25, ...)

Bien évidemment, il est prévu que la plateforme de gestion d'accès AMP comporte une fonctionnalité de paiement au site fournisseur E d'une contrepartie financière pour l'accès au contenu payant, ou soit associée à un serveur de paiement approprié.

Il peut également être prévu que l'interface I ne soit pas téléchargée à chaque accès à un contenu multimédia et que l'ordinateur C puisse garder en mémoire l'interface I pour simplement la lancer lors d'une nouvelle demande d'accès au contenu multimédia M payant.

La solution proposée par la présente invention présente ainsi les avantages suivants :
> La facturation de l'accès au contenu multimédia payant est effectuée directement sur la facturation du fournisseur d'accès réseau ISP (comme le fournisseur d'accès Internet par exemple) de l'utilisateur U, sans besoin pour l'utilisateur de posséder ou d'obtenir un identifiant d'utilisation. En effet, il lui suffit simplement d'accepter un système de facturation par son fournisseur d'accès. Ainsi, en passant par les opérateurs FAI, il est possible de donner accès au système de la présente invention à plus de 90% du grand public (qui utilise généralement un fournisseur d'accès Internet pour accéder à Internet).
➢ La présente invention ne nécessite pas d'installation préalable et donc peut être facilement utilisée par tous les internautes quel que soit le système d'exploitation de leur ordinateur, sans dissuader l'internaute par l'exigence d'une installation préalable.
➢ Pour l'utilisateur U (par exemple un internaute), la présente invention représente une consommation occasionnelle maitrisée et facilitée par un achat en quelques clics. En effet, l'internaute n'a qu'à cliquer pour confirmer son achat et retrouver le montant de son achat sur la facture FAI.
➢ La présente invention favorise donc l'achat d'impulsion en raison d'une facilité d'accès au contenu payant, d'une offre personnalisée qui, par exemple, peut être tarifée à la minute (en comparaison à une offre mensuelle) et d'une parfaite sécurité du système (aucune coordonnée bancaire, ni information personnelle, à communiquer en ligne).

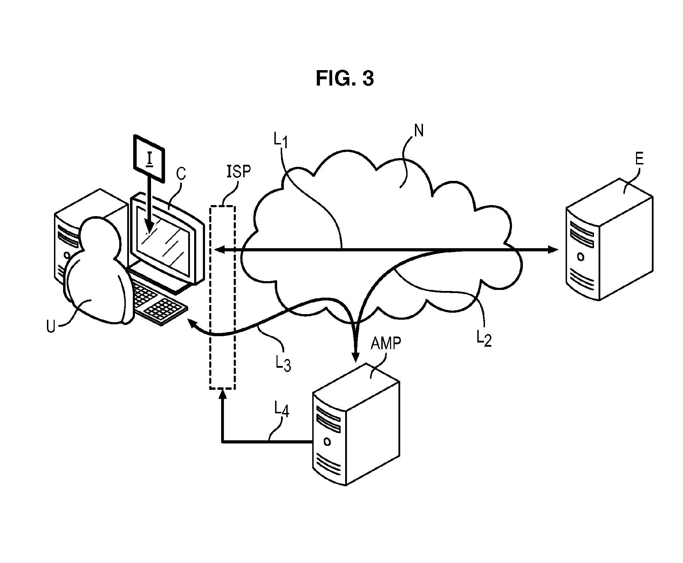

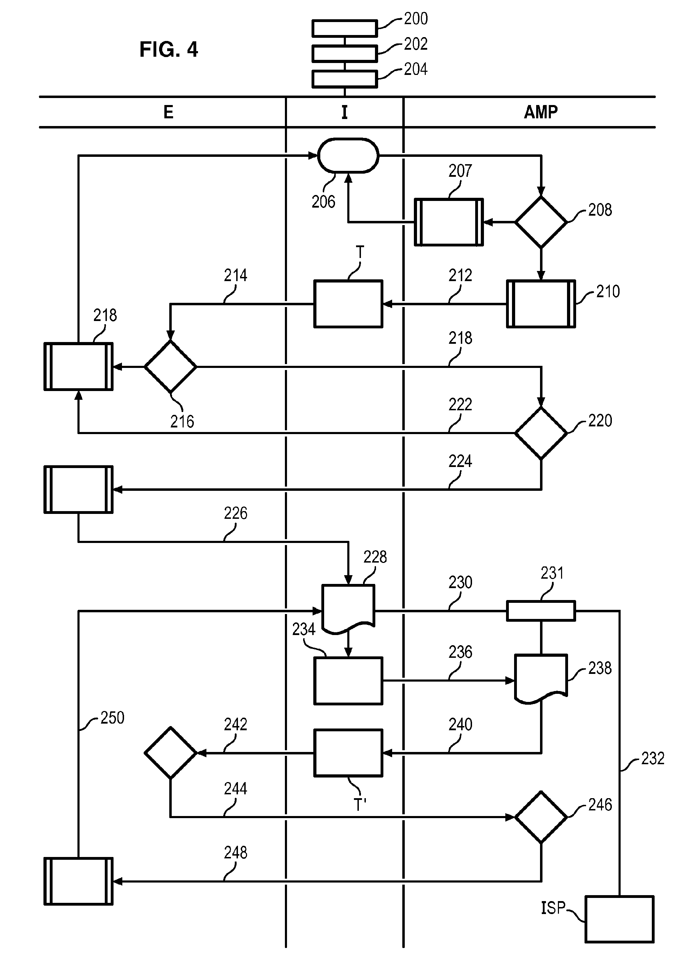

En référence aux figures 3 et 4 et selon un second mode de réalisation de la présente invention, l'utilisateur U possède un ordinateur C connecté à un réseau N par l'intermédiaire d'un fournisseur ISP d'accès au réseau. Sur le réseau N est connecté également le site fournisseur E de contenus multimédia M. Toutefois selon ce mode de réalisation, le site fournisseur E est connecté directement au réseau N et la plateforme de gestion d'accès AMP est également connectée au réseau N.

L'ordinateur C de l'utilisateur U est connecté via le réseau N au site fournisseur E par une connexion L1. Via cette connexion L1, l'utilisateur peut accéder librement aux contenus multimédia gratuits du site fournisseur E. Lorsque l'utilisateur souhaite accéder à un contenu multimédia dont l'accès est payant, il envoie alors une requête d'accès 200. Suite à cette requête 200, la plateforme de gestion d'accès AMP ou le site fournisseur E transmet (étape 202) par le réseau N à l'utilisateur final U les instructions pour lancer l'interface spécifique 1 de lecture du contenu multimédia payant. De façon similaire à ce qui est mis en oeuvre pour le premier mode de réalisation, une fois cette interface I spécifique téléchargée par l'ordinateur C de l'utilisateur U, l'interface I est lancée (étape 204). Une fois cette interface I lancée, elle envoie (étape 206) une requête d'accès au contenu multimédia payant recherché à la plateforme de gestion d'accès AMP. Après réception de cette requête, la plateforme de gestion d'accès AMP vérifie (étape 208) si l'utilisateur est autorisé à se connecter pour accéder au contenu multimédia payant. Dans l'affirmative, une connexion L3 est établie (étape 210) entre la plateforme de gestion d'accès AMP et l'interface I. Dans la négative, alors la plateforme de gestion d'accès AMP envoie (étape 207) un message d'erreur à l'interface I à destination de l'utilisateur U. Par la connexion L3, la plateforme AMP envoie (étape 212) un jeton d'authentification T à l'interface I. Grâce à ce jeton d'authentification T, l'interface I s'identifie (étape 214) auprès du site fournisseur E. Suite à cette authentification, le site fournisseur E tente d'établir (étape 216) une connexion L2 avec plateforme de gestion d'accès AMP. Si cette tentative échoue, alors un message d'erreur est envoyé (étape 218) à l'interface I à destination de l'utilisateur. Si cette tentative réussit, la connexion L2 est établie, à travers laquelle le site fournisseur envoie (étape 218) le jeton d'authentification T pour vérifier si ce dernier est valide. La plateforme de gestion d'accès AMP vérifie alors (étape 220) que le jeton T est valide, c'est-à-dire qu'il correspond à celui qu'il a transmis à l'interface I à l'étape 212. Dans la négative, il envoie un retour d'erreur (étape 222) au site fournisseur E, qui lui-même envoie un message d'erreur (étape 218) à l'interface I. Si le jeton d'authentification T correspond au jeton transmis, la plateforme de gestion d'accès AMP envoie une réponse positive (étape 224) au site fournisseur E. Une fois cette réponse positive (étape 224) reçue, le site fournisseur E fournit le contenu multimédia M demandé (étape 226) à l'interface I via la connexion L1 afin que cette dernière puisse le lire (étape 228).

Durant la lecture du contenu multimédia M par l'interface I ou à la fin de la lecture du contenu multimédia ou après un arrêt de la lecture ou après une erreur de lecture ou de réception du contenu multimédia M, l'interface I envoie (étape 230) le premier ensemble de données caractéristiques de la lecture du contenu multimédia à la plateforme de gestion d'accès AMP. Comme expliqué précédemment, ces données peuvent par exemple comprendre des informations relatives à la durée de lecture et/ou à une quantité de contenu multimédia accédé (nombre d'éléments ou tailles de ces éléments). Ces informations sont alors utilisées (étape 231) par la plateforme de gestion d'accès AMP pour la facturation du contenu multimédia lu ou reçu par l'interface I. Une fois le premier ensemble de données traité par par la plateforme de gestion d'accès AMP et le montant de la facturation déterminé, la plateforme de gestion d'accès AMP envoie le second ensemble de données caractéristiques de la lecture du contenu multimédia, c'est-à-dire cette information de facturation (étape 232) au fournisseur d'accès ISP par la connexion L4, avec une information identifiant l'utilisateur, pour que le fournisseur d'accès répercute ce montant sur la facturation de l'utilisateur U pour la connexion au réseau.

Il existe deux types d'accès différents au contenu multimédia M : l'accès synchrone (dit en flux) et l'accès asynchrone (avec téléchargement préalable).

Dans le cas d'accès synchrones au contenu multimédia, un seul jeton d'authentification unique est généré par plateforme de gestion d'accès AMP. Ainsi, la première authentification de l'interface I sur la plateforme de gestion d'accès AMP permet de garantir la connexion au contenu multimédia. Toute coupure de la connexion L3 entre l'interface I et la plateforme de gestion d'accès AMP entraine automatiquement l'émission d'une alerte par la plateforme de gestion d'accès AMP au site fournisseur E (par la connexion L2) afin d'effectuer une coupure du flux entre l'interface I et le site fournisseur E sur la connexion L1. Ce type d'accès est préféré dans le cas d'une diffusion continue de contenus multimédia (vidéo, audio,jeux en ligne, ...).

Dans le cas d'un accès asynchrone au contenu, l'interface I réalise, avant toute requête d'accès au contenu multimédia, une demande de jeton d'authentification auprès de la plateforme de gestion d'accès AMP. Ensuite, ce jeton est utilisé auprès du site fournisseur E qui vérifie, via sa connexion L2 avec la plateforme de gestion d'accès AMP, la validité du jeton. Ainsi le contenu multimédia demandé pourra être délivré à l'utilisateur U par l'interface I. Dans ce cas, toute coupure de la liaison L3 entre l'interface I et la plateforme de gestion d'accès AMP ou de la connexion L2 entre la plateforme de gestion d'accès AMP et le site fournisseur E, entrainera une fermeture de l'interface I. Ce type d'accès est préféré dans le cas d'une diffusion discontinue de contenu multimédia (par exemple du contenu HTML statique ou dynamique, fichiers,...).

Ainsi, de retour à la figure 4 et dans le cas d'un accès asynchrone, l'utilisateur U fait une demande d'accès (étape 234) pour un nouveau contenu (par exemple une nouvelle page web au contenu multimédia payant) via l'interface I. Suite à cette demande d'un nouveau contenu multimédia, l'interface I envoie une demande (étape 236) pour un nouveau jeton d'authentification à la plateforme de gestion d'accès AMP. En réponse, la plateforme de gestion d'accès AMP crée (étape 238) un nouveau jeton d'authentification T' qu'elle envoie (étape 240) à l'interface I. Grâce à ce jeton d'authentification T', l'interface I s'authentifie (étape 242) auprès du site fournisseur E. Suite à cette authentification, le site fournisseur E envoie (étape 244) le jeton d'authentification T' pour vérifier si ce dernier est valide. La plateforme de gestion d'accès AMP vérifie (étape 246) alors que le jeton T' est valide, c'est-à-dire qu'il correspond à celui qu'il a transmis à l'interface I. Si le jeton d'authentification T' est valide, la plateforme de gestion d'accès AMP envoie une réponse positive (étape 248) au site fournisseur E. Une fois cette réponse positive reçue, le site fournisseur E envoie le contenu demandé (étape 250) à l'interface I via la connexion L1 afin que cette dernière puisse le lire (étape 228). Comme précédemment décrit, en cas d'échec d'authentification, un message d'erreur est envoyé à l'interface I (ces cas, facilement appréhendables par l'homme du métier, n'ayant pas été représentés pour ne pas alourdir la figure 4). A chaque nouvelle création d'un jeton d'authentification, cette information est alors utilisée 231 par la plateforme de gestion d'accès AMP pour la facturation du contenu multimédia lu ou reçu par l'interface I. Comme expliqué précédemment, une fois le montant de la facturation déterminé par la plateforme de gestion d'accès AMP, cette dernière envoie en tant que deuxième ensemble de données caractéristiques de la lecture du contenu multimédia cette information 232 au fournisseur d'accès réseau ISP par la connexion L4 pour que ce dernier répercute ce montant sur la facturation de l'utilisateur final U pour la connexion au réseau.

Pour sécuriser le procédé en recourant à des techniques de cryptographie, selon une réalisation particulière de l'invention, il est prévu d'extraire une séquence de bits au sein d'une image donnée du contenu multimédia fourni en se basant sur le codage des canaux RVBA. Ainsi, avec une image codée à 32 bits de profondeur, en réalisant l'extraction d'un carré de 8 pixels de côté, on dispose de 64 pixels codés sur 32bits soit un total de 2048 bits utilisables pour la création d'une clef de chiffrement.

Cette clef est ensuite elle-même cryptée en utilisant à plusieurs reprises une méthode de HASH définie au préalable. Le résultat obtenu est utilisé pour réaliser un chiffrement des messages nécessaires à la gestion du système, par exemple via l'algorithme DES. Le message crypté comprend préférentiellement au moins l'une des informations suivantes : identifiant du contenu multimédia consulté, adresse IP de l'ordinateur C de l'utilisateur U sur le réseau N, et la date exacte de la demande d'accès au contenu multimédia.

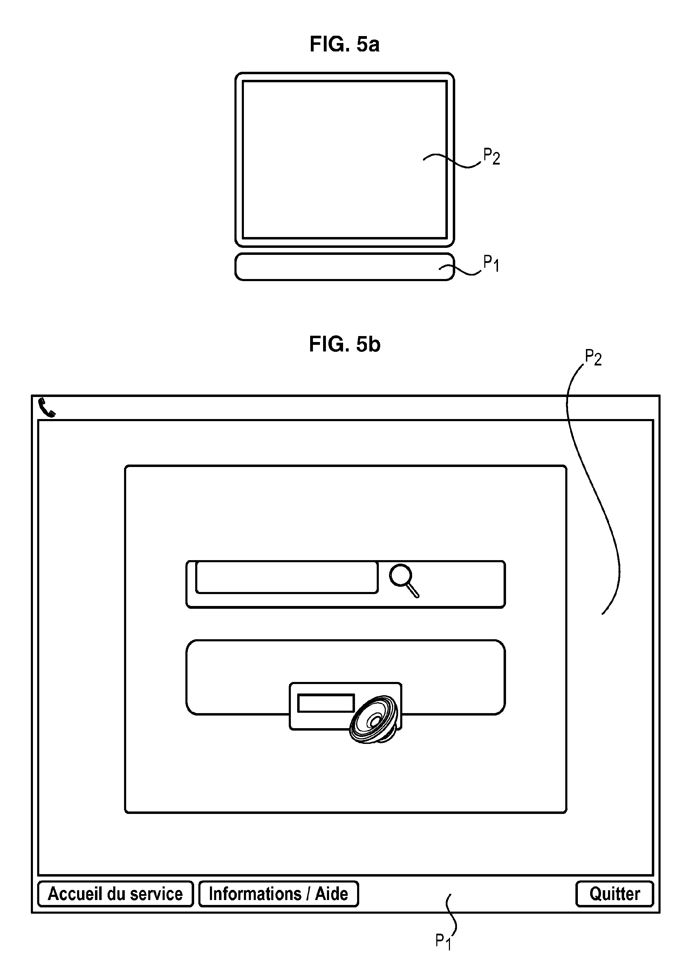

Concernant l'interface I dédiée à la lecture du contenu multimédia M, il est prévu, en référence aux figures 5a et 5b qu'elle comprenne deux parties distinctes:
- une partie P1 d'interface avec l'utilisateur et d'information,
- une partie P2 d'affichage du contenu multimédia.

En référence à l'exemple de la figure 6b, il est possible de distinguer différents éléments de la partie P1 d'interface avec l'utilisateur et d'information, comprenant par exemple le temps passé par l'utilisateur U sur un contenu multimédia payant (notamment dans le cas d'un accès asynchrone), le nom et détails du service, ainsi que des raccourcis vers les pages d'aide et d'accueil du service).

Sur la partie P2 d'affichage, le contenu multimédia M proprement dit est affiché (vidéo, images, jeu en ligne, contenu HTML, ...). Cette partie peut toutefois être également interactive avec l'utilisateur (utilisation de formulaires et de boutons par exemple). Dans le cas d'un fichier audio, l'interface comprend bien entendu une interface sonore, la partie P2 affichant des informations sur le contenu sonore.

Plusieurs technologies peuvent être utilisées pour l'interface I comme les technologie Java™, Microsoft Silverlight® et plus préférentiellement Adobe Flex® ou tout autre type de technologie de type RIA (application Internet riche ou « Rich Internet Application » en termes anglo-saxons) connu de l'état de la technique et comprenant des outils permettant la restitution de contenus comme la vidéo, l'audio ou encore les jeux en ligne.

Concernant les contenus de type Web (pages HTML par exemple), si la technologie utilisée ne comprend pas d'outil d'affichage par défaut, il est possible d'intégrer un élément de d'analyse et de restitution d'une page HTML (statique ou dynamique) en utilisant par exemple le langage ActionScript™

Par exemple, cet élément permet la mise en oeuvre des étapes suivantes:
1 - récupération du contenu HTML,
2 - analyse du contenu HTML, et constitution des différents éléments qui la composent,
3 - pré-chargement des différentes images situées dans la page HTML,
4 - analyse des éléments de style CSS et modification des attributs des éléments HTML construits,
5 - utilisation des éléments graphiques internes de la technologie utilisée pour reconstruire la structure visuelle de la page,
6 - gestion des évènements de clic sur le ou les lien(s).

## Revendications

1. Procédé d'accès à un contenu multimédia (M) stocké dans un serveur d'un site fournisseur (E) depuis un équipement informatique (C) d'un utilisateur (U), l'équipement informatique (C) étant connecté à un réseau (N) via une architecture d'un fournisseur d'accès (ISP), le procédé étant **caractérisé en ce qu'**il comprend les étapes suivantes :
■ transfert à l'équipement informatique (C) d'instructions pour lancer une interface de visualisation (I) apte à lire ledit contenu multimédia (M) et apte à communiquer via le réseau (N) avec une plateforme de gestion d'accès (AMP),
■ lancement sur l'équipement informatique (C) de l'interface (I),
■ envoi par l'interface (I) à la plateforme de gestion d'accès (AMP) d'une requête d'accès au contenu multimédia (M),
■ réception du contenu multimédia (M) par l'interface (I),
■ lecture du contenu multimédia (M) dans l'interface (I),
■ envoi par l'interface (I) d'un premier ensemble de données caractéristiques de la lecture du contenu multimédia (M) à la plateforme de gestion d'accès (AMP),
■ traitement par la plateforme de gestion d'accès (AMP) du premier ensemble de données de sorte à obtenir un second ensemble de données caractéristiques de la lecture du contenu multimédia (M), ledit second ensemble de données caractéristiques de la lecture du contenu multimédia (M) étant envoyé à un serveur du fournisseur d'accès (ISP) afin de facturer à l'utilisateur (U) la lecture du contenu multimédia (M).

2. Procédé selon la revendication 1, dans lequel le réseau est le réseau Internet et que le fournisseur d'accès est un fournisseur d'accès Internet.

3. Procédé selon la revendication 1 ou 2, dans lequel le serveur du site fournisseur (E) est connecté au réseau via la plateforme de gestion d'accès (AMP), et le procédé comprend les étapes suivantes :
■ envoi par l'interface (I) à la plateforme de gestion d'accès (AMP) d'une requête d'accès au contenu multimédia (M),
■ envoi par la plateforme de gestion d'accès (AMP) au serveur du site fournisseur (E) d'une requête d'accès au contenu multimédia (M),
■ réception par la plateforme de gestion d'accès (AMP) du contenu multimédia (M) envoyé par le serveur du site fournisseur (E) en réponse à la requête d'accès au contenu multimédia (M),
■ envoi par la plateforme de gestion d'accès (AMP) du contenu multimédia (M) à l'interface (I).

4. Procédé selon la revendication 3, dans lequel, lors d'une requête d'accès au contenu multimédia (M) par l'interface (I), cette dernière génère un jeton d'authentification (T) pour s'identifier sur la plateforme de gestion d'accès (AMP).

5. Procédé selon l'une des revendications 1 et 2, dans lequel le serveur du site fournisseur (E) et la plateforme de gestion d'accès (AMP) sont tous deux connectés directement au réseau (N), le procédé étant **caractérisé en ce qu'**il comprend les étapes suivantes :
■ envoi par l'interface (I) à la plateforme de gestion (AMP) d'une requête d'accès au contenu multimédia (M),
■ envoi par la plateforme de gestion (AMP) d'un jeton d'authentification (T) à l'interface (I),
■ envoi par l'interface (I) du jeton d'authentification (T) au site fournisseur (E),
■ vérification par le site fournisseur (E) du jeton d'authentification (T) auprès de la plateforme de gestion (AMP),
■ en cas de vérification positive, envoi par le site fournisseur (E) du contenu multimédia (M) à l'interface (I).

6. Procédé selon la revendication 5, lequel comprend une étape de requête d'accès par l'interface (I) à la plateforme de gestion (AMP) pour chaque nouveau contenu multimédia (M).

7. Procédé selon la revendication 6, dans lequel la plateforme de gestion (AMP) envoie un nouveau jeton d'identification pour chaque nouveau contenu multimédia (M) demandé.

8. Procédé selon l'une des revendications précédentes, dans lequel l'envoi par l'interface (I) d'un premier ensemble de données caractéristiques de la lecture du contenu multimédia (M) à la plateforme de gestion d'accès (AMP) comprend au moins l'une des informations suivantes :
■ temps de lecture,
■ quantité de contenu multimédia reçu ou lu,
■ arrêt de lecture du contenu multimédia,
■ arrêt de l'interface (I),
■ erreur dans la réception ou la lecture du contenu multimédia.

9. Procédé de d'accès à un contenu multimédia (M) depuis un équipement informatique (C) d'un utilisateur (U), l'équipement informatique (C) étant connecté à un réseau (N) via une architecture d'un fournisseur d'accès (ISP), le procédé étant **caractérisé en ce qu'**il comprend les étapes suivantes :
■ lancement sur l'équipement informatique (C) d'une interface (I) apte à lire ledit contenu multimédia (M) et apte à communiquer via le réseau (N) avec une plateforme de gestion d'accès (AMP),
■ envoi à la plateforme de gestion d'accès (AMP) d'une requête d'accès au contenu multimédia (M),
■ réception du contenu multimédia (M),
■ lecture du contenu multimédia (M) par l'interface (I),
■ envoi d'un ensemble de données relatives à la lecture du contenu media (M) à la plateforme de gestion d'accès (AMP).

10. Procédé d'accès à un contenu multimédia (M) stocké dans un serveur d'un site fournisseur (E) depuis un équipement informatique (C) d'un utilisateur (U), l'équipement informatique (C) étant connecté à un réseau (N) via une architecture d'un fournisseur d'accès (ISP), le procédé étant **caractérisé en ce qu'**il comprend les étapes suivantes :
■ réception d'une requête d'accès à un contenu multimédia (M) de la part d'une interface (I) de l'équipement informatique (C), l'interface (I) étant apte à lire ledit contenu multimédia (M),
■ vérification de l'autorisation d'accès,
■ en cas de vérification positive, envoi d'une requête d'accès au contenu multimédia (M) demandé auprès du site fournisseur (E),
■ réception du contenu multimédia (M),
■ envoi du contenu multimédia (M) vers l'interface (I),
■ réception d'un ensemble de données relatives à la lecture du contenu multimédia (M) à la plateforme de gestion d'accès (AMP) émises par l'interface (I),
■ envoi de données relatives à la lecture du contenu multimédia (M) à un serveur fournisseur d'accès (ISP) afin de facturer à l'utilisateur la lecture du contenu multimédia (M).

11. Procédé d'accès à un contenu multimédia (M) stocké dans un serveur d'un site fournisseur (E) depuis un équipement informatique (C) d'un utilisateur (U), l'équipement informatique (C) étant connecté à un réseau (N) via une architecture d'un fournisseur d'accès (ISP), le procédé étant **caractérisé en ce qu'**il comprend les étapes suivantes :
■ réception d'une requête d'accès au contenu multimédia (M) de la part d'une interface (I) de l'équipement informatique (C), l'interface (I) étant apte à lire ledit contenu multimédia (M) et apte à communiquer via le réseau (N) avec une plateforme de gestion d'accès (AMP),
■ vérification de l'autorisation d'accès,
■ en cas de vérification positive, envoi à l'interface (I) d'un jeton d'authentification (T, T') pour l'accès au contenu multimédia (M),
■ réception d'un ensemble de données caractéristiques de la lecture du contenu multimédia (M) à la plateforme de gestion d'accès (AMP) émises par l'interface (I),
■ traitement par la plateforme de gestion d'accès (AMP) du premier ensemble de données de sorte à obtenir un second ensemble de données relatives à la lecture du contenu multimédia (M), ledit second ensemble de données caractéristiques de la lecture du contenu multimédia (M) étant envoyé à un serveur du fournisseur d'accès (ISP) afin de facturer à l'utilisateur (U) la lecture du contenu multimédia (M).

12. Plateforme de gestion d'accès (AMP), **caractérisée en ce qu'**elle comprend des moyens de mise en oeuvre du procédé selon l'une des revendications précédentes.

13. Environnement informatique pour permettre l'accès à un contenu multimédia (M) par un utilisateur (U), **caractérisé en ce qu'**il comprend :
■ un équipement informatique (C) connecté à un réseau (N) via une architecture d'un fournisseur d'accès (ISP),
■ un serveur d'un site fournisseur (E) connecté directement ou indirectement au réseau (N),
■ une plateforme de gestion d'accès (AMP) connecté au réseau (N),
■ des moyens de mise en oeuvre du procédé selon l'une des revendications 1 à 11.

14. Produit de programme d'ordinateur, **caractérisé en ce qu'**il comprend des moyens de génération d'une interface de visualisation de contenu multimédia, l'interface étant destinée à :
■ envoyer via un réseau (N) une requête d'accès au contenu multimédia (M) à une plateforme de gestion d'accès (AMP),
■ envoyer un jeton d'authentification (T),
■ recevoir un contenu multimédia (M),
■ lire le contenu multimédia (M), et
■ envoyer un ensemble de données caractéristiques de la lecture du contenu multimédia (M) à la plateforme de gestion d'accès (AMP).
